# EUROPÄISCHE PATENTANMELDUNG

(11) **EP 1 034 706 A2**
(43) Veröffentlichungstag der Anmeldung: **13.09.2000**
(21) Anmeldenummer: 00100481.1
(22) Anmeldetag: 11.01.2000
(51) Int. Cl.: A23N 12/00, B08B 3/02

(54) **Reinigungsanlage zur Reinigung von vorzugsweise mit Erde verschmutzten Gegenständen**

(30) Priorität: 11.01.1999 DE 19900537
(71) Anmelder: Dietrich, Martina, 86150 Augsburg (DE)
(72) Erfinder: Dietrich, Martina, 86150 Augsburg (DE)
(74) Vertreter: Munk, Ludwig, Dipl.-Ing.

(57) **Zusammenfassung**

Die Erfindung bezieht sich auf eine Reinigungsanlage (10, 270) zur Reinigung von vorzugsweise mit Erde verschmutzten Gegenständen (12), umfassend zumindest eine um eine Achse (20) rotierende Düse (22) zur Beaufschlagung der zu reinigenden Gegenstände (12) mit einem Druckluft-Flüssigkeits-Gemisch (60). Damit die Reinigung der Gegenstände bei geringem Energie- und Rohstoffverbrauch verbessert wird und damit die Vorrichtung bei einfacher Konstruktion flexibel einsetzbar ist, wird vorgeschlagen, dass die zumindest eine um die Achse (20) rotierende Düse (22) in einem im Wesentlichen geschlossenen Raum (18) angeordnet ist, wobei die Düse (22) einen Auslauf (110) mit zumindest einer Öffnung (120) aufweist, über die eine Rückführung von in dem geschlossenen Raum (18) enthaltenem Luft-Flüssigkeits-Gemisch zu dem aus der Düse (22) austretenden Fluidstrom erfolgt.

## Beschreibung

Die Erfindung bezieht sich auf eine Reinigungsanlage zur Reinigung von vorzugsweise mit Erde verschmutzten Gegenständen, umfassend zumindest eine um eine Achse rotierende Düse zur Beaufschlagung der zu reinigenden Gegenstände mit einem Druckluft-Flüssigkeits-Gemisch.

Eine derartige Reinigungsanlage ist bereits in der DE 41 22 864 A1 beschrieben. Dabei werden auf einem Transportband Früchte unter eine Düse geführt, über die ihrerseits ein Luft-Flüssigkeits-Gemisch gewünschter Temperatur auf die Früchte abgegeben wird. Das Luft-Flüssigkeits-Gemisch weist eine Temperatur unterhalb des Gefrierpunktes auf, wodurch aus der Düse erstarrte Flüssigkeitspartikel, also Eispartikel, austreten, die eine gründliche Reinigung von Gegenständen ermöglichen. Ein geschlossener Raum, in dem die rotierende Düse angeordnet ist, ist nicht vorgesehen.

Der vorliegenden Erfindung liegt das Problem zu Grunde, eine Reinigungsanlage zum Reinigen von vorzugsweise mit Erde verschmutzten Gegenständen dahingehend weiterzubilden, dass die Reinigung der Gegenstände bei geringem Energie- und Rohstoffverbrauch verbessert wird und dass die Reinigungsanlage bei einfacher Konstruktion flexibel einsetzbar ist.

Das Problem wird erfindungsgemäss dadurch gelöst, dass die zumindest eine um die Achse rotierende Düse in einem im Wesentlichen geschlossenen Raum angeordnet ist, wobei die Düse einen Auslauf mit zumindest einer Öffnung aufweist, über die eine Rückführung von in dem geschlossenen Raum enthaltenem Luft-Flüssigkeits-Gemisch zu dem aus der Düse austretenden Fluidstrom erfolgt.

Durch die Ausführungsform wird der Vorteil erreicht, dass das die Düse verlassende Druckluft-Flüssigkeits-Gemisch nach Aufprall auf die zu reinigenden Gegenstände innerhalb des geschlossenen Raumes verbleibt und über die in dem Auslauf der Düse angeordnete zumindest eine Öffnung dem Druckluft-Flüssigkeits-Gemisch wieder zugeführt werden kann. Untersuchungen haben gezeigt, dass dadurch eine besonders gründliche Reinigung der Gegenstände ermöglicht wird. Insbesondere wird durch die Rückführung des in dem geschlossenen Raum enthaltenen Luft-Flüssigkeits-Gemischs das aus dem Auslauf der Düse austretende Druckluft-Flüssigkeits-Gemisch mit Stickstoff angereichert, wodurch der besondere Effekt erzielt wird, dass die gereinigten Gegenstände besonders lagerfähig und haltbar sind. Ein weiterer Vorteil der Rückführung besteht darin, dass wertvolle Rohstoffe wie z. B. Wasser zur Reinigung eingespart werden können.

Bei einer bevorzugten Ausführungsform ist vorgesehen, dass die zumindest eine Düse in einer in dem geschlossenen Raum rotierenden Scheibe angeordnet ist, wobei ein Auslass des Auslaufs der Düse an einer den zu reinigenden Gegenständen zugewandten Seite der Scheibe mündet und wobei die zumindest eine Öffnung oberhalb der Scheibe angeordnet ist. Durch die Scheibe wird erreicht, dass das aus der Düse austretende Luft-Flüssigkeits-Gemisch zwischen Scheibe und den zu reinigenden Gegenständen konzentriert wird.

Eine weitere Verbesserung der Reinigungswirkung wird dadurch erzielt, indem auf der Unterseite der Scheibe im Bereich des Auslasses der Düse eine Strömungseinrichtung angeordnet ist, die einen bei der Rotationsbewegung der Scheibe aufgenommenen Luftstrom zum Auslass der Düse hin leitet, so dass das Druckluft-Flüssigkeits-Gemisch mit dem gebündelten Luft-Flüssigkeits-Gemisch vereinigt wird. Auch dadurch wird einerseits der Druck des austretenden Gemischs erhöht, andererseits wird aber auch in dem geschlossenen Raum enthaltenes Gemisch wiederverwendet, so dass Rohstoffe wie Luft und Wasser eingespart werden können. Auch tritt der Effekt auf, dass das austretende Gemisch mit Stickstoff angereichert wird, wodurch die Lagerfähigkeit und Haltbarkeit von Erdfrüchten deutlich verbessert werden kann.

Vorzugsweise ist die Strömungseinrichtung trichterförmig ausgebildet und in Drehrichtung der Scheibe vor dem Auslass der Düse angeordnet, wobei eine Austrittsöffnung der Strömungseinrichtung zumindest bereichsweise den Auslass der Düse umrandet, um eine vollständige Vermischung des aus der Düse austretenden Fluidstroms mit dem durch die Strömungseinrichtung gebündelten Luftstrom zu erreichen.

Zur Erhöhung der Strömungsgeschwindigkeit ist vorgesehen, dass die Strömungseinrichtung einen Strömungsquerschnitt aufweist, der sich zunächst in Strömungsrichtung verjüngt und anschliessend wieder erweitert.

Um eine vollständige Beaufschlagung der zu reinigenden Gegenstände zu erreichen, ist vorgesehen, dass die Düse einen Kreis mit einem Durchmesser D abfährt, wobei der Durchmesser D einer Breite einer in dem geschlossenen Raum angeordneten Fördereinrichtung für die zu reinigenden Gegenstände entspricht.

Die Fördereinrichtung umfasst parallel verlaufende Walzen, die mit ihrer Längsachse in Richtung der Transportrichtung verlaufen, wobei die Walzen als Schneckenwalzen ausgebildet sind, um einerseits eine Rotationsbewegung der zu reinigenden Gegenstände ihrer eigenen Achse und andererseits eine Vorwärtsbewegung in Transportrichtung zu ermöglichen.

Es ist vorgesehen, dass die Transportgeschwindigkeit der zu reinigenden Gegenstände zu einer Drehgeschwindigkeit der Scheibe so eingestellt ist, dass letztere Geschwindigkeit größer ist. Hierdurch wird sichergestellt, dass mit hoher Effizienz eine Reinigung der Gegenstände erfolgt.

Zur weiteren Verbesserung der Reinigungswirkung ist vorgesehen, dass die Reinigungsanlage unterhalb der rotierenden Scheibe zumindest bereichsweise eine schiefe Ebene aufweist, wobei ein Abstand der zu reinigenden Gegenstände zu der rotierenden Scheibe in Transportrichtung abnimmt, so dass die Beaufschlagung mit dem Druckluft-Flüssigkeits-Gemisch zum Ende des Reinigungsvorgangs intensiviert wird.

Die Reinigungsanlage zeichnet sich des Weiteren dadurch aus, dass der geschlossene Raum eine Einlass- und eine Auslassöffnung aufweist, die jeweils mit einem Vorhang, vorzugsweise Lamellenvorhang, schall- und wasserdicht abgedichtet sind.

Zum Transport der zu reinigenden Gegenstände sind in der schiefen Ebene Förderwalzen die quer zu der Transportrichtung liegen und der schiefen Ebene sind in einer waagerechten Ebene angeordnete Filzwalzen nachgeordnet, um die noch feuchten Gegenstände zu trocknen.

Die rotierende Scheibe kann zwei diagonal gegenüberliegende Düsen aufweisen. Auch besteht die Möglichkeit, zwei oder mehrere Düsen in radialer Richtung auf verschiedenen Radien und/oder in Umfangsrichtung hintereinander anzuordnen.

In besonders vorteilhafter Ausgestaltung ist die Reinigungsanlage mehrstufig ausgebildet, wobei in einem geschlossenen Raum in Förderrichtung mehrere, vorzugsweise zwei rotierende Scheiben hintereinander angeordnet sind und wobei zwischen den rotierenden Scheiben eine Verengung der Transportbahn vorgesehen ist, damit im Bereich der ersten Scheibe eine Stauwirkung der zu reinigenden Gegenstände erzielt wird.

Zur Vor- und/oder Nachreinigung sind im Einlass- und/oder Auslassbereich Sprühdüsen zur Abgabe eines Fluids wie Wasser angebracht.

Die Reinigungsanlage kann stationär und/oder mobil aufgebaut sein. Bei mobiler Ausführungsform sind Metallteile zur Gewichtsreduzierung aus Aluminium ausgebildet. Durch die Ausführungsform von wesentlichen Metallteilen aus Aluminium-Werkstoff wird die Masse etwa um den Faktor 3 reduziert, was schließlich zu einer Energieeinsparung führt.

Eine Stauvorrichtung am Ende der schiefen Ebene innerhalb der Reinigungsanlage ergibt den Vorteil, dass sich die zu reinigenden Gegenständen länger im Einflussbereich der drehenden Düse aufhalten, wodurch eine bessere Reinigungswirkung erzielt wird. Auch reiben die Gegenstände gegeneinander, wodurch eine weitere Reinigung bewirkt wird.

Bei einer Anlage zur Erzeugung des Druckluft-Flüssigkeits-Gemischs ist vorgesehen, dass diese zumindest einen Wassertank mit Wasserpumpe aufweist, der beheizbar ist und eine Wärmedämmung mit integriertem Schallschutz umfasst, womit die Anlage auch im Freien bei Temperatur nahe Null oder unter Null Grad verwendbar ist.

Auch können eingangsseitig der Reinigungsanlage Sprühdüsen angeordnet sein, um trockene Gegenstände, insbesondere trockene Kartoffeln, zu besprühen, wodurch Beschädigungen der Schale insbesondere bei Frühkartoffeln vermieden werden. Ein weiterer Vorteil von eingangsseitigen Sprühdüsen ist, dass mit Lehmerde behaftete Früchte mit Wasser oder Abwasser besprüht werden können, um ein Zusammenkleben der Früchte zu vermeiden.

In weiterer bevorzugter Ausführungsform ist die Reinigungsanlage Bestandteil einer Ernte- und/oder Lademaschine. Eine Erntemaschine mit eigenständigem Erfindungscharakter zeichnet sich dadurch aus, dass diese zumindest eine Reinigungsanlage zum Reinigen von mit Erde verunreinigten Gegenständen aufweist. Bei einer mehrreihigen, vorzugsweise sechsreihigen Erntemaschine ist eine Erntevorrichtung mit vorzugsweise einem Entblätterer, Entköpfer sowie einem Polderschar vorgesehen, wobei der Erntevorrichtung quer zur Fahrtrichtung liegende Transportwalzen nachgeordnet sind, die die Gegenstände auf ein Förderband leiten, welches die Gegenstände in zumindest eine, vorzugsweise drei parallel nebeneinander angeordnete Reinigungsstationen weiterleitet.

Auch kann vorgesehen sein, dass der Erntevorrichtung einer Erntereihe eine einzelne Reinigungsstation zugeordnet ist, wobei die Gegenstände von der Erntevorrichtung über eine Fördereinrichtung wie ein Förderpaddel transportiert werden. Auch sind der Reinigungsstation zugeordnete Komponenten wie Kompressor, Antriebsmaschine, Wasserspeicher usw. Bestandteile der Erntemaschine.

Als weitere Reinigungsanlage mit eigenständigem Erfindungscharakter wird eine Ladevorrichtung für mit Erde verschmutzte Gegenstände wie Zuckerrüben vorgeschlagen, wobei die Ladevorrichtung eine kammförmige Aufnahmevorrichtung mit in Abstand zueinander angeordneten Zinken, der eine Walze wie Kammwalze zur Aufnahme von gelagerten Gegenständen nachgeordnet ist und wobei die Gegenstände über ein Förderpaddel jeweils in eine nachgeordnete Reinigungsstation gefördert werden.

Insbesondere ist anzumerken, dass die Anlage zur Erzeugung des Druckluft-Flüssigkeits-gemischs in einzelne Anlageteile zergliederbar ist, wie z. B. Reinigungsanlage, Antrieb mit Kompressor, Wasser-Reservoir, die sodann auf mobilen Paletten befestigbar sind und vor Ort montierbar sind. Selbstverständlich kann das von der Anlage erzeugte Druckluft-Flüssigkeits-Gemisch auch zum Anschluss eines Schlauchs mit einer Reinigungslanze bzw. Reinigungspistole zum Reinigen der Erntemaschine bzw. der Lademaschine verwendet werden.

Hervorzuheben ist, dass erfindungsgemäß Früchte wie Wurzeln, Kartoffeln und Zuckerrüben ohne Erdmasse bewegt und transportiert werden können. Durch den Transport gereinigter Früchte, Zuckerrüben und Wurzeln verbleibt ein erheblicher Anteil an Erdmasse auf dem Acker und wird nicht in weiterverarbeitende Fabriken transportiert. Auch dadurch wird ein nicht unerheblicher Beitrag zur Energieeinsparung geleistet.

Weitere Einzelheiten, Vorteile und Merkmale der Erfindung ergeben sich nicht nur aus den Ansprüchen und den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: eine Vorderansicht einer Reinigungsanlage zur Reinigung von verschmutzten Gegenständen, teilweise in Schnittdarstellung,
- Fig. 2a, b: Seitenansichten der Reinigungsanlage gemäß Fig. 1, teilweise in Schnittdarstellung,
- Fig. 3: eine Draufsicht der Reinigungsanlage gemäß Fig. 1,
- Fig. 4: eine Düse zur Aufbringung eines Druckluft-Feuchtigkeits-Gemischs auf die zu reinigenden Gegenstände, teilweise in Schnittdarstellung,
- Fig. 5: eine weitere Ansicht der Düse gemäß Fig. 4,
- Fig. 6: eine Seitenansicht einer im Bereich des Düsenauslasses angeordneten Luftleitvorrichtung,
- Fig. 7: die Luftleitvorrichtung gemäß Fig. 6 in Draufsicht,
- Fig. 8: eine schematische Darstellung einer Anlage zum Betreiben der Reinigungsanlage gemäß Fig. 1,
- Fig. 9: eine schematische Darstellung einer weiteren Anlage zum Betreiben der Reinigungsanlage gemäß Fig. 1 als mobile Einheit,
- Fig. 10: eine zweistufige Reinigungsanlage zum Reinigen von Gegenständen in Draufsicht,
- Fig. 11: eine mobile Reinigungsanlage mit zweistufiger Reinigungsstation,
- Fig. 12: eine Erntemaschine mit drei parallel angeordneten Reinigungsstationen,
- Fig. 13: eine weitere Ausführungsform einer Erntemaschine mit sechs parallel angeordneten Reinigungsstationen,
- Fig. 14: eine Ausführungsform einer Ladestation mit sechs parallel angeordneten Reinigungsstationen und
- Fig. 15 a-c: Reinigungsanlageen zum Lagern der durch die Reinigungsstation gereinigten Erdfrüchte.

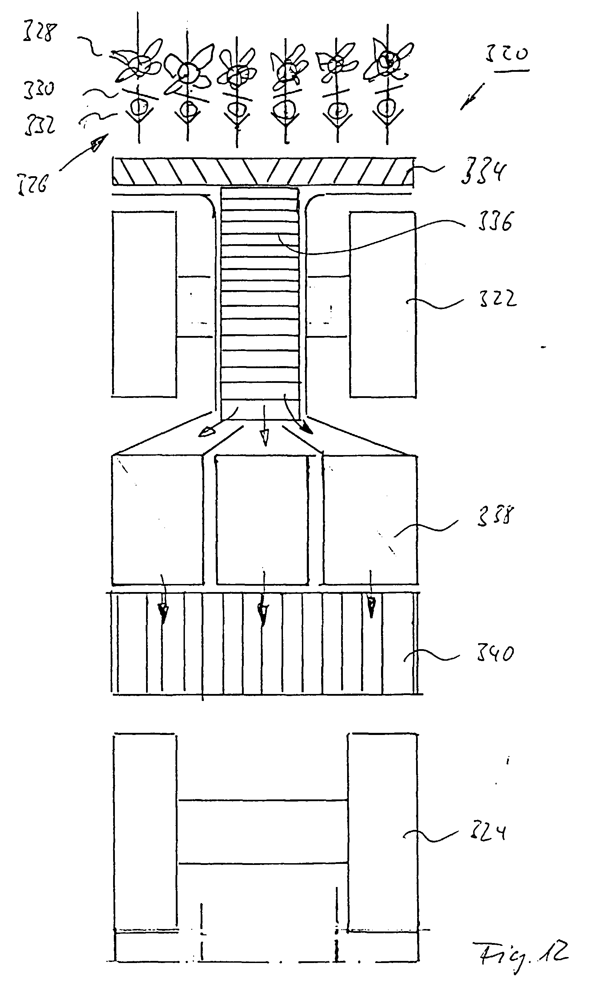

Fig. 10 zeigt eine Vorderansicht - teilweise in Schnittdarstellung - einer Reinigungsanlage 10 zum Reinigen von insbesondere mit Erde verschmutzten Gegenständen 12, wie z. B. Kartoffeln, Zuckerrüben, Wurzeln und/oder ähnlichen Gegenständen.

Die Reinigungsanlage 10 besteht aus einem Gehäuse, welches ein Unterteil 14 und eine abnehmbare Haube 16 aufweist. Durch die Haube 16 und das Unterteil 14 wird im Wesentlichen ein geschlossener Raum 18 gebildet, in dem eine um eine Achse 20 rotierbare Düse 22 angeordnet ist. In dem beschriebenen Ausführungsbeispiel ist die Düse 22 in einer rotierenden Scheibe 24 randseitig eingebracht, wobei eine Längsachse 25 der Düse parallel oder im Wesentlichen parallel zu der Rotationsachse 20 der Scheibe verläuft. Der Düse 22 diagonal gegenüberliegend ist eine Ausgleichsmasse 27 angeordnet. In einer vorteilhaften Ausgestaltung kann die Ausgleichsmasse 27 auch als weitere Düse ausgebildet sein.

Unterhalb der Scheibe 24, d. h. im Wirkungsbereich der Düse 22, werden zu reinigende Gegenstände 12 mittels einer Fördereinrichtung 26 transportiert. Die Fördereinrichtung 26 besteht dabei aus in Förderrichtung, d. h. senkrecht zur Zeichenebene parallel angeordneten Förderschnecken 28, die vorzugsweise einen Filz- bzw. Gummiprofilbelag aufweisen und mit Abstand nebeneinander angeordnet sind, so dass die zu reinigenden Gegenstände 12 ab einer bestimmten Größe transportiert werden und Schmutzpartikel abgeführt werden können.

Die Förderschnecken sind im Querschnitt in etwa V- bzw. U-förmig angeordnet, so dass eine Förderwanne gebildet wird. Die Breite B des Förderstroms entspricht im Wesentlichen dem Durchmesser D der Scheibe 24, so dass bei Rotation der Scheibe 24 bzw. der Düse 22 sämtliche in dem Förderstrom enthaltenen Gegenstände 12 erreicht werden können.

Unterhalb der Fördereinrichtung 26 ist eine weitere Förderschnecke 30 zum Abtransport der von den Gegenständen 12 abgereinigten Verschmutzungen angeordnet. Dabei ist die Förderschnecke am Ende einer im Querschnitt V-förmigen Gleitrutsche 32 angeordnet, so dass durch die Zwischenräume der Förderschnecken fallende Schmutzpartikel auf die Gleitfläche 32 fallen, von dieser zum Boden hin geleitet werden und in einem Scheitelpunkt 34 von der Förderwalze 30 ergriffen und abtransportiert werden können.

Die Scheibe 24 ist an einer Achse 36 und einem Querträger 38 innerhalb des Raumes 18 drehbar gelagert. Über einen Antrieb 40 wird die Achse 36 und damit die Scheibe 24 angetrieben. Über eine Zuleitung 42, die vorzugsweise innerhalb der hohlen Achse 36 geführt wird, wird die Düse 22 mit einem Druckluft-Feuchtigkeits-Gemisch versorgt. Der Querbalken 38 mit Drehachse 36 und Drehscheibe 24 ist in einem Gestell 44 über eine Spindel 46 höhenverstellbar angeordnet, so dass der Abstand der Drehscheibe 24 zu den zu reinigenden Gute 12 einstellbar ist. Die Spindel kann über einen Antrieb 47 oder über eine Kurbel angetrieben werden.

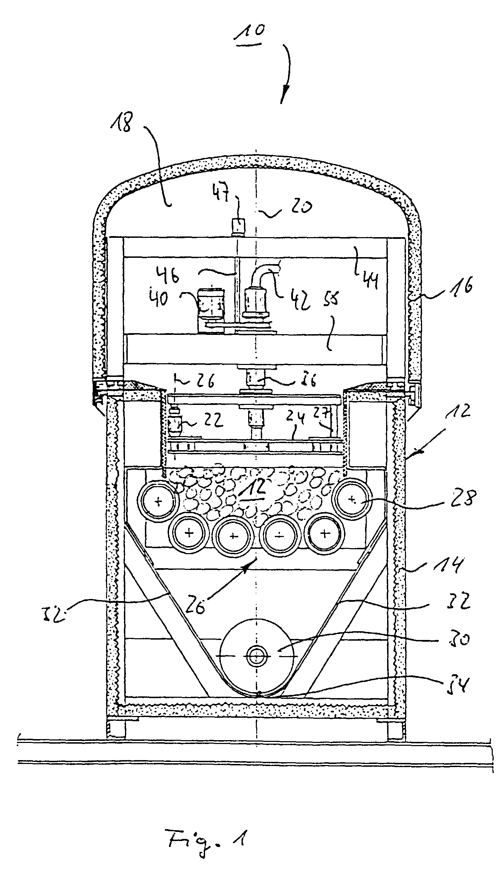

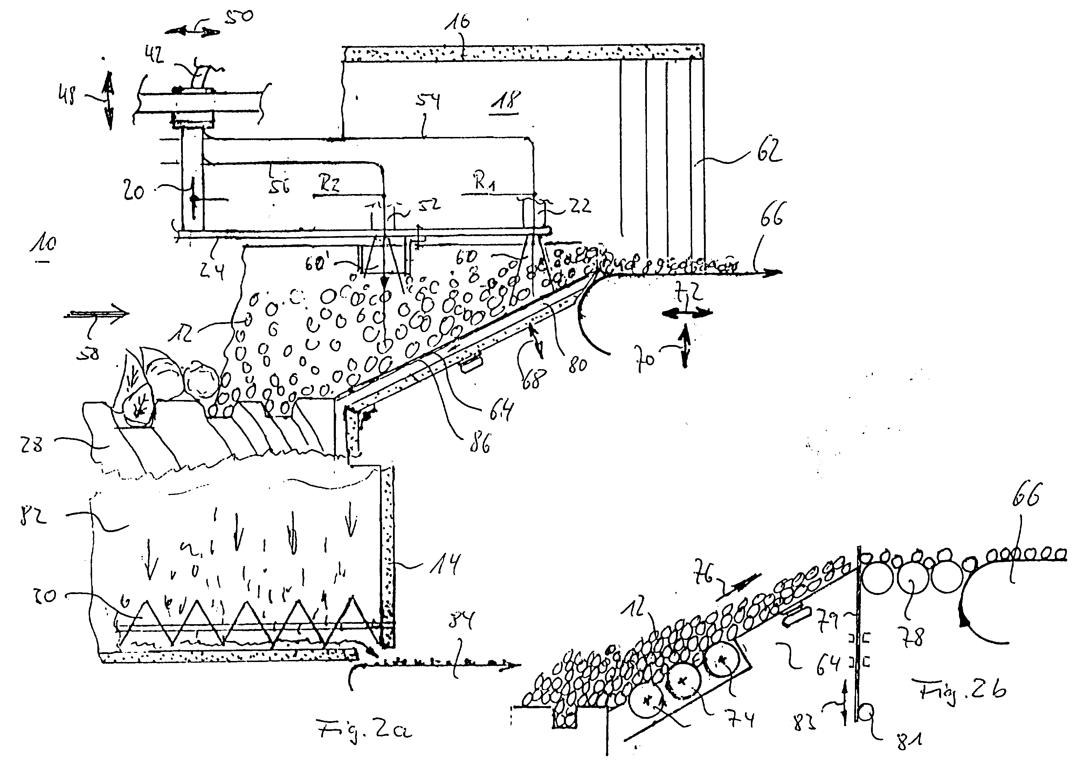

In Fig. 2 ist eine Seitenansicht der Reinigungsanlage 10, teilweise in Schnittdarstellung, dargestellt. Wie schon mit Bezug zu Fig. 1 erläutert, kann die Drehscheibe 24 mit der Düse 22 vertikal vestellt werden, was durch einen Pfeil 48 dargestellt ist. Des Weiteren besteht die Möglichkeit, die Drehscheibe 24 horizontal in Richtung des Pfeiles 50 zu verschieben, um ebenfalls den Abstand zwischen der Drehscheibe 24 und den zu reinigenden Gegenständen 12 zu variieren.

Fig. 2 zeigt eine zweite Ausführungsform der Scheibe 24, wobei zusätzlich zu der Düse 22, die in Abstand R₁ von der Drehachse 20 angeordnet ist, eine weitere Düse 52 vorgesehen ist, die in derselben radialen Richtung, jedoch mit einem kleineren Radius R₂ angeordnet ist. Die Düsen sind über separate Zuleitungen 54, 56 mit der gemeinsamen Zuleitung 42 verbunden.

Erfindungsgemäß ist vorgesehen, dass die Gegenstände 12 mittels der Förderschnecken 28 in Richtung des Pfeils 58 transportiert werden. Dabei liegen viele Lagen von Gegenständen 12 übereinander, so dass nicht gewährleistet ist, dass sämtliche Gegenstände mit einem aus den Düsen 22, 52 austretenden Druckluft-Feuchtigkeits-Gemisch 62, 62' in Verbindung kommen. Um sicherzustellen, dass das Druckluft-Feuchtigkeits-Gemisch 62, 62' sämtliche Gegenstände 12 erreicht, ist eine von den Förderschnecken 28 zu einer Auslassöffnung 62 ansteigende schiefe Ebene 64 vorgesehen, durch die erreicht wird, dass im Bereich der Düse 22 sich die Gegenstände 12 derart vereinzelt haben, dass das Druckluft-Feuchtigkeits-Gemisch 60 sämtliche Gegenstände 12 einzeln erreicht. Der schiefen Ebene 64 ist ein Förderband 66 nachgeordnet, über das die gereinigten Gegenstände 12 abtransportiert werden können. Die schiefe Ebene 64 kann in Richtung des Pfeils 68 in ihrer Neigung verstellt werden. Entsprechend kann das Förderband in Richtung der Pfeile 70, 72 vertikal und/oder horizontal verschoben werden.

Wie in der Fig. 2a dargestellt, können in der schiefen Ebene 64 Förderwalzen 74 angeordnet sein, um die Gegenstände 12 in Richtung des Pfeils 76 transportieren zu können. In einem Übergangsbereich von der schiefen Ebene zu dem Förderband 66 können alternativ Filzwalzen 78 angeordnet sein, die die noch feuchten Gegenstände 12 vor der Übernahme durch das Förderband 66 trocknen. Vorteilhaft ist am Ende der schiefen Ebene 64, d. h. am Übergang zu den vertikal angeordneten Walzen 78 eine Stauvorrichtung 79 angeordnet, die als Plattenschieber ausgebildet ist und über einen Antrieb 81 in vertikaler Richtung, d. h. in Richtung des Pfeils 83 mechanisch und/oder elektrisch antreibbar ist.

Die von den Gegenständen 12 abgereinigten Schmutzpartikel gelangen einerseits durch zwischen den Förderschnecken gebildete Freiräume und andererseits durch einen Kanal 80, der Bestandteil der schiefen Ebene 64 ist, in einen Sammelraum 82, der von den im Querschnitt V-förmigen Begrenzungsflächen 32 begrenzt wird. Die Schmutzpartikel werden durch den Schneckenförderer 30 auf ein Förderband 84 transportiert. Hierzu ist anzumerken, dass die Gegenstände 12 beim Transport über die schiefe Ebene auf einem Lochblech 86 aufliegen, das für abgewaschene Schmutzpartikel durchlässig ist.

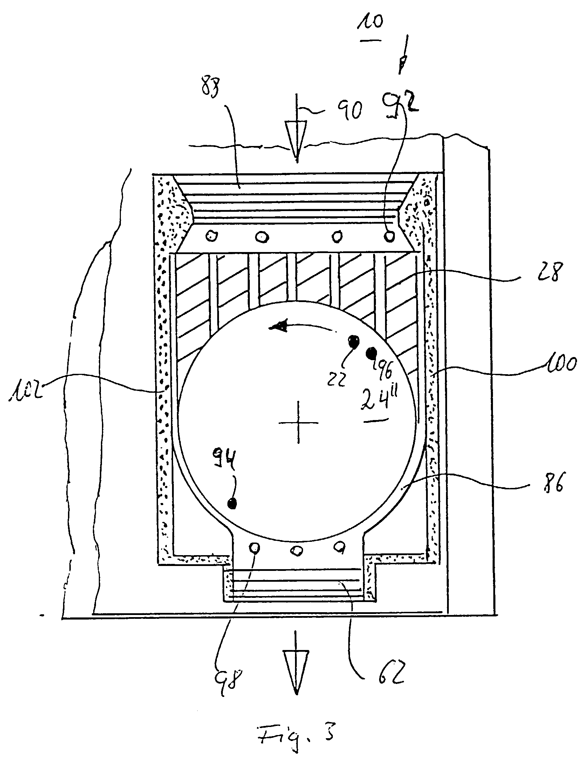

In Fig. 3 ist eine Draufsicht der Reinigungsanlage 10 dargestellt. Durch eine Einlassöffnung 88 werden die Gegenstände 12 in Richtung des Pfeils 90 zugeführt und können gegebenenfalls eingangsseitig über vorzugsweise umfangsseitig angeordnete Düsen 92 vorgereinigt werden. Sodann gelangen die Gegenstände 12 auf die Förderschnecken 28 und werden unterhalb der Drehscheibe 24" gefördert. In dem hier dargestellten Beispiel weist die Drehscheibe 24" drei Düsen auf, wobei der Düse 22 diagonal gegenüberliegend eine weitere Düse 94 angeordnet ist und wobei alternativ in Umfangsrichtung hinter der Düse 22 eine weitere Düse 96 angeordnet sein kann.

Nach Reinigung der Gegenstände werden diese über die Auslassöffnung 62 dem Förderband 66 zugeleitet. Zur Endreinigung können Düsen 98 im Bereich der Auslassöffnung 62 vorgesehen sein. Die Einlassöffnung 88 sowie die Auslassöffnung 62 werden über nicht dargestellte Lamellenvorhänge vorzugsweise aus Kunststoff wasser- und schalldicht abgedichtet. Die Drehscheibe 24 wird seitlich von Leitblechen 100, 102 begrenzt.

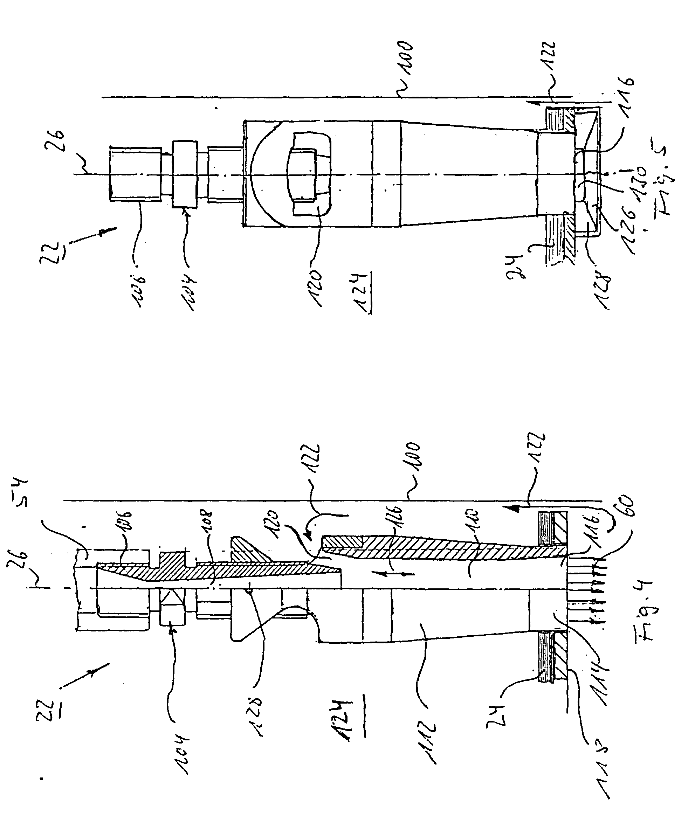

In Fig. 4 ist eine erste Seitenansicht der Düse 22 gezeigt, die teilweise in Schnittdarstellung dargestellt ist. Die Düse 22 besteht aus einer Innendüse 104, die über einen Gewindestutzen 106 mit dem Anschlussrohr 54 verbunden ist. Im Inneren der Düse ist ein Strömungskanal 108 vorgesehen, der in einen Auslauf 110 mündet. Der Auslauf 110 ist Teil einer Außendüse 112, die mit der Innendüse 104 verbunden, vorzugsweise verschraubt ist. Ein Mündungsstück 114 der Außendüse 112 ist in einer Öffnung der Drehscheibe 24 eingebracht, so dass eine Auslassöffnung 116 der Düse 22 bzw. der Außendüse 112 bündig mit einer Unterseite 118 der Drehscheibe 24 abschließt. Aus der Auslassöffnung 116 tritt das Druckluft-Feuchtigkeits-Gemisch 60 aus.

Erfindungsgemäß ist vorgesehen, dass der Auslauf 110 zumindest eine Öffnung 120 aufweist, über die unterhalb der Drehscheibe 24 sich befindendes Luft-Feuchtigkeits-Gemisch in Richtung des Pfeils 122 und/oder im Bereich 124 oberhalb der Drehscheibe 24 sich befindendes Luft-Feuchtigkeits-Gemisch angesaugt und dem der Düse 22 abgegebenen Fluidstrom beigemischt bzw. rückgefiihrt wird. Erfindungsgemäß wird dadurch eine Rückführung des Fluidstromes erreicht, wodurch insbesondere eine Anreicherung des Gemisches 60 mit Stickstoff erfolgt. Die Öffnung 120 kann durch Axialverschiebung der Außendüse 112 in Richtung des Pfeils 126 variiert werden. Die Außendüse 112 kann über Sicherungsstift 128 an der Innendüse 104 gesichert werden.

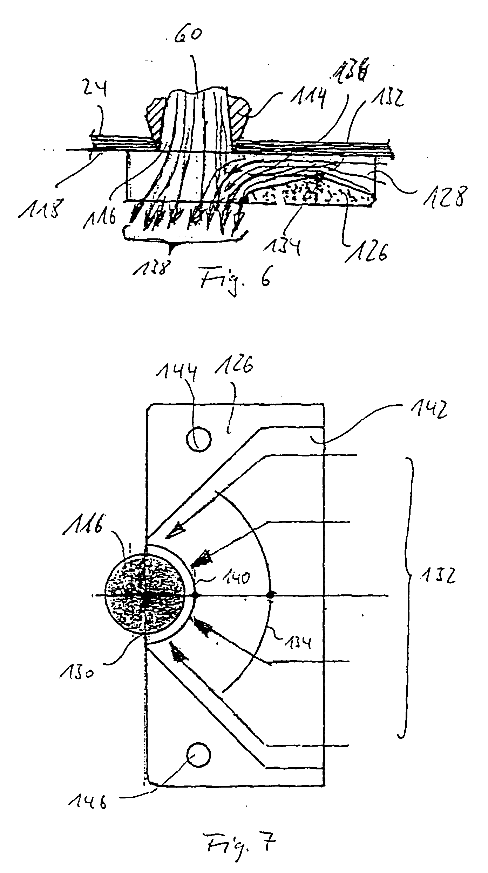

In Fig. 5 ist eine weitere Ansicht der Düse 22 dargestellt, die eine Einsicht in die Öffnung 120 erlaubt. Bei einer bevorzugten Ausführungsform ist die Öffnung derart angeordnet, dass diese in Bewegungsrichtung zeigt, so dass durch die Drehbewegung der Scheibe 24 bzw. der Düse 22 in dem Raum 124 befindliches Luftgemisch in die Öffnung 120 und somit in den Auslaufkanal 110 gelangt und mit dem Druckluft-Feuchtigkeits-Gemisch 60 vermischt wird.

Zur Verbesserung der Wirkung der Strömung 60 ist im Bereich der Auslassöffnung 116, wie in Fig. 5 dargestellt, eine trichterförmige Strömungsvorrichtung 126 angeordnet, die in Rotationsrichtung einen größeren Querschnitt 128 und im Bereich der Auslassöffnung 116 einen kleineren Querschnitt 130 aufweist.

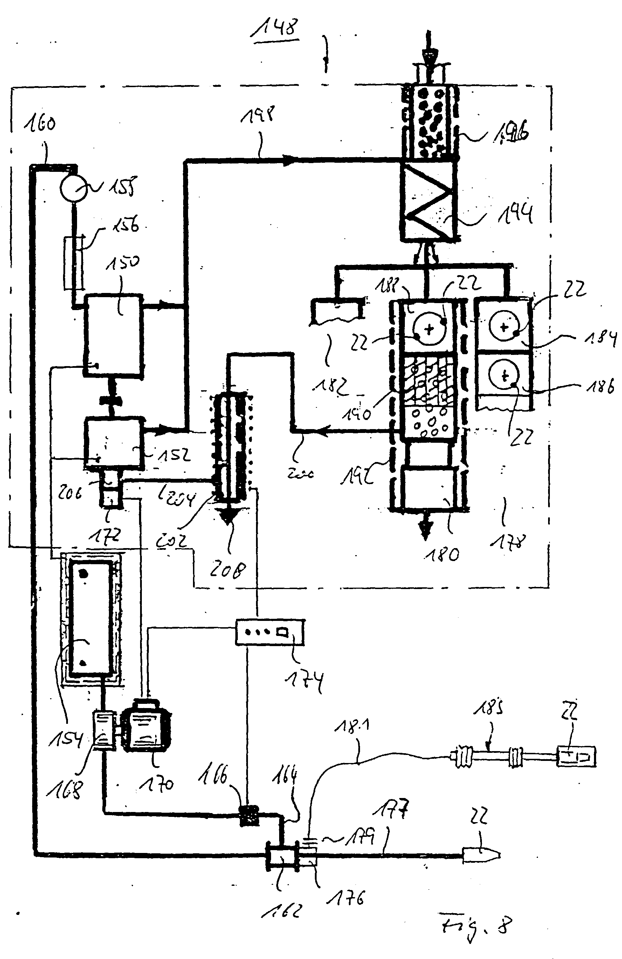

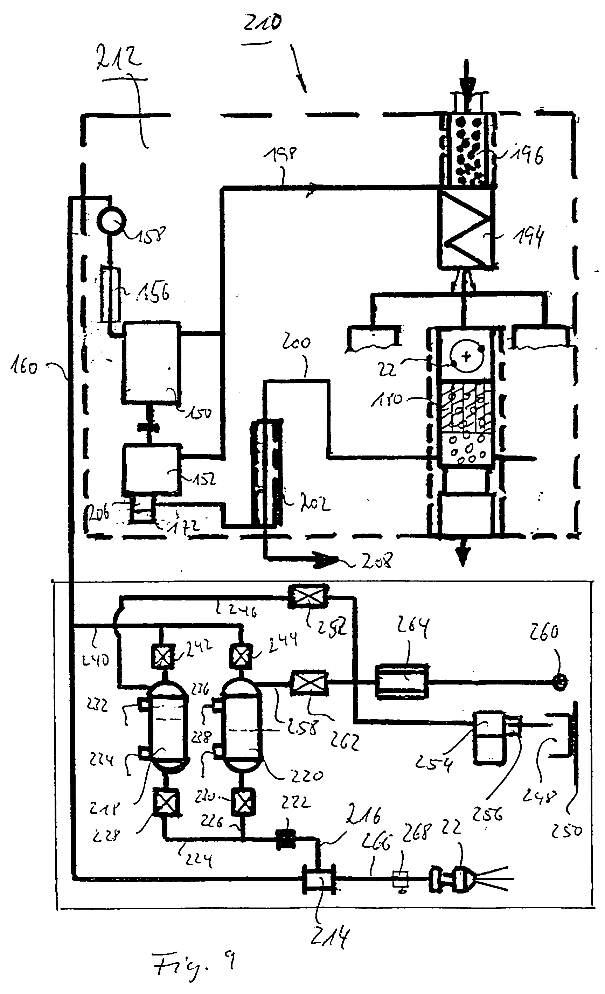

Eine detaillierte Beschreibung des trichterförmigen Strömungskanals 126 erfolgt anhand der Fig. 6 und 7. Fig. 6 zeigt eine Schnittdarstellung mit der auf der Unterseite 118 im Bereich der Auslassöffnung 116 der Düse 22 angeordneten Strömungsvorrichtung 126. Die Einlassöffnung 128 weist im Wesentlichen einen rechteckigen Querschnitt auf, wobei sich der Querschnitt in Richtung zu der Auslassöffnung 116 verkleinert. Auch ist vorgesehen, dass ein durch die Strömungsvorrichtung 126 gebildeter Strömungskanal 132 sich in Richtung zu der Auslassöffnung 116 verjüngt, wozu eine Unterseite 134 der Strömungsvorrichtung 126 im Wesentlichen dreieckförmig ausgebildet ist.

Eine in dem Strömungskanal sich ausbildende Strömung 136 vermischt sich sodann mit der aus der Düse 22 austretenden Strömung 60. Durch die Rotationsbewegung der Scheibe 24 erhält die Strömung 136 eine hohe Geschwindigkeit, so dass durch eine sich aus der Strömung 60 und der Strömung 136 zusammensetzende Strömung 138 eine verbesserte Reinigungswirkung erzielt wird.

Fig. 7 zeigt eine Draufsicht auf die Strömungsvorrichtung 26, wobei schematisch die Auslassöffnung 116 der Düse 22 dargestellt ist. Im Bereich der Auslassöffnung 116 weist die Strömungsvorrichtung 126 eine halbkreisförmige Aussparung 140 auf, so dass die so gebildete Auslassöffnung 130 der Strömungsvorrichtung 126 zumindest bereichsweise die Auslassöffnung 116 der Düse 22 umschließt, um auf diese Weise eine gute Vermischung der Teilströme 60 und 132 zu ermöglichen. Die Strömungsvorrichtung 126 bildet einen Strömungskanal 142, der in der Draufsicht im Wesentlichen trapezförmig bzw. trichterförmig ausgebildet ist. Die Strömungsvorrichtung kann an der Unterseite 118 der Drehscheibe befestigt wie verschraubt werden, wobei in der Strömungsvorrichtung 126 Durchbrechungen 144, 146 zur Aufnahme von Schrauben angeordnet sind. Die Strömungsvorrichtung 126 besteht vorzugsweise aus Kunststoff oder Gummi.

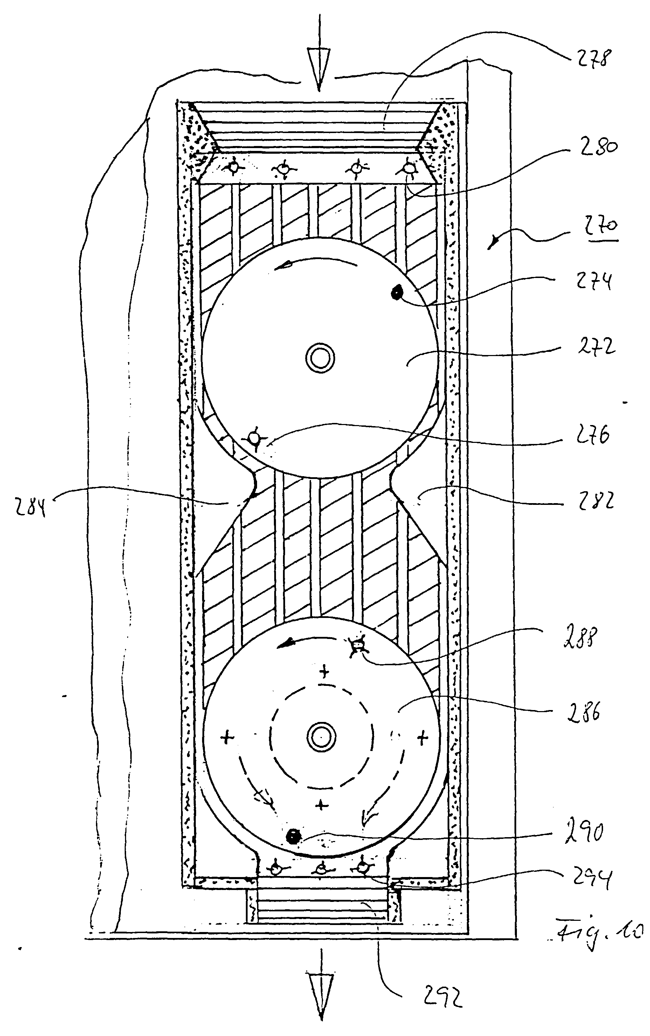

In Fig. 8 ist rein schematisch eine Anlage 148 zur Erzeugung des Druckluft-Flüssigkeits-Gemischs dargestellt. Als wesentliche Elemente sind ein Antrieb wie Dieselmotor, Elektromotor oder Freiflugkolbenmotor 150 zum Antreiben eines Verdichters 152, ein Flüssigkeitsreservoir 154 sowie die Düse 22 zu bezeichnen, über die verdichtetes Fluid zum Reinigen verschmutzter Gegenstände 12 abgegeben wird. Über eine Zuleitung saugt der Verdichter Luft an, die durch den Antrieb 152 komprimiert bzw. verdichtet wird. Die durch die Verdichtung erwärmte Druckluft wird zunächst einem Nachkühler und anschließend einer Druckluftaufbereitung 158 zugeführt. Über eine Verbindungsleitung 160 gelangt die so abgekühlte und zubereitete Druckluft in eine Mischkammer 162, in der die Druckluft mit einer durch die Zuleitung 164 zugeführten Flüssigkeit vermischt wird. Im Verlauf der Zuleitung 164 ist eine Heizvorrichtung 166 angeordnet, über die die Flüssigkeit erwärmt werden kann. Im weiteren Verlauf der Zuleitung 164 ist eine Pumpe 168 angeordnet, die Flüssigkeit aus dem Flüssigkeitsreservoir 154 abpumpt. Die Pumpe 168 wird über einen Elektromotor 170 angetrieben, der seine elektrische Energie aus einem Generator 172 erhält, der von dem Antrieb 152 angetrieben wird. Der Elektromotor 170 sowie die Heizeinrichtung 166 werden über eine Steuereinheit 174 gesteuert.

Am Ausgang der Mischkammer 162 ist eine Verzweigung 176 wie z. B. ein T-Stück mit zumindest einer Absperrvorrichtung angeordnet, von dem einerseits eine Rohrleitung zu den in den einzelnen Reinigungsanlageen 10 angeordneten Düsen 22 und andererseits über eine Kupplung 179 ein Schlauch 181 zu einer Reinigungsanlage 183 ausgeht. Die Reinigungsanlage ist als Reinigungslanze bzw. Reinigungspistole mit Griff und Absperrventil ausgebildet, an deren Ende eine Düse vorzugsweise von einem Schalldämpfer umgeben angeordnet ist.

In dem hier dargestellten Ausführungsbeispiel sind drei Reinigungsstraßen 178, 180, 182 parallel geschaltet, wobei die Reinigungsstraße 178 zwei hintereinander angeordnete Reinigungsstationen 184, 186 aufweist, wobei die erste Reinigungsstation 184 zur Vorreinigung und die Reinigungsstation 186 zur Vollreinigung bestimmt ist.

Die Reinigungsstraße 180 weist eine Reinigungsstation 188 auf, der ein Wasserbad mit vorzugsweise warmen Wasser nachgeschaltet ist, in dem bei Bedarf Steine und sonstige Verunreinigungen abgeschieden werden können. Beispielhaft ist die Reinigungsstraße 180 mit einer Schalldämmung 192 umgeben.

Alle Reinigungsstraßen 178, 180, 182 werden über ein Förderband 194 z. B. mit zu reinigenden Kartoffeln versorgt. Die Kartoffeln werden in einer Station 196 mit über eine Zuleitung 198 angesaugter warmer Abluft des Antriebs 152 sowie des Verdichters 150 vorgewärmt und zusätzlich mit warmen Wasser besprüht, was sich als optimale Vorbereitung für den Reinigungsvorgang in den Reinigungsstationen erwiesen hat. Von den Gegenständen abgereinigte Verunreinigungen werden über eine Leitung 200 in eine Aufbereitungsanlage 202 abgeführt, wobei die Aufbereitungsanlage als Trocknungsanlage ausgeführt sein kann. In der Trocknungsanlage ist eine hydraulisch angetriebene Walze angeordnet, die über eine Zuleitung 204 mit einem Hydraulikaggregat 206 verbunden ist. Ferner ist das Hydraulikaggregat 206 sowie der Generator 172 mit in der Vorstation 196 angeordneten Hydraulik Walzen bzw. Elektroantrieben verbunden. Die aus der Aufbereitungsanlage 202 abgeführten Verunreinigungen werden über eine Förderschnecke 206 einem Container (nicht dargestellt) zugeleitet.

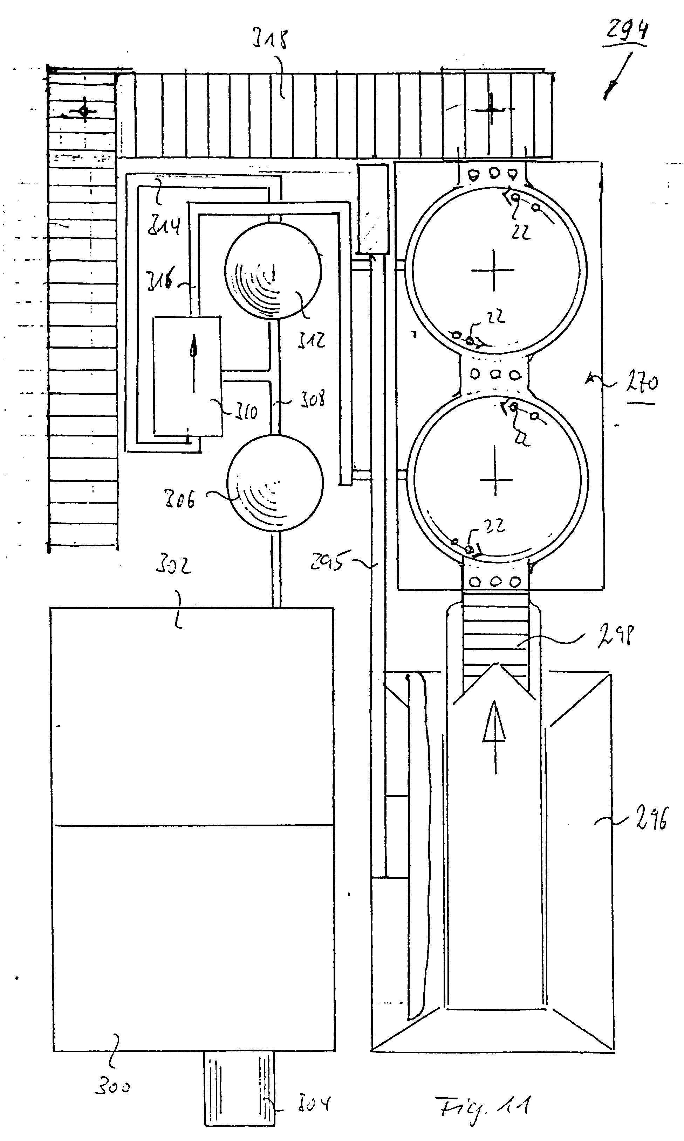

Fig. 9 zeigt schematisch eine Anlage 210, die sich von der Anlage 148 im Wesentlichen durch die Wasserversorgung unterscheidet. Ein eingerahmter Anlagenteil 212 weist im Wesentlichen den gleichen Aufbau auf wie der eingerahmte Anlagenteil gemäß Fig. 8, so dass gleiche Elemente mit den gleichen Bezugszeichen bezeichnet sind.

Die gekühlte und zubereitete Druckluft wird über die Leitung 160 einem Mischer 214 zugeführt, der über eine Zuleitung 216 mit zwei Wasserreservoirs 218, 220 verbunden ist. Im Verlauf der Zuleitung 216 ist ein Ventil 222 angeordnet, von dem eine Zuleitung 224 in das Reservoir 218 und eine weitere Zuleitung 226 in das Reservoir 220 abzweigt. In den Leitungen 224, 226 sind ebenfalls Ventile 228, 230 angeordnet.

Zur Überwachung des Füllstands in den Reservoirs 218, 220 ist jedes Reservoir mit Füllstandssensoren 232, 234, 236, 238 ausgestattet, die jeweils einen unteren bzw. oberen Füllstand detektieren. Des Weiteren sind die Wasserreservoirs 218, 220 über eine Zuleitung 240 und jeweils ein Ventil 242, 244 mit der Druckluftleitung 160 verbunden, so dass die Flüssigkeitsreservoirs 218, 220 bei geöffneten Ventilen 242, 244 einen inneren Überdruck aufweisen.

Das Flüssigkeitsreservoir 218 ist über eine Leitung 246 mit einem mobilen Wasserreservoir 248, das beispielsweise auf einem Anhänger 250 transportiert werden kann, verbunden. Im Verlauf der Leitung 246 ist ein Ventil 252 und vorzugsweise eine Elektropumpe 254 angeordnet. Um Verunreinigungen der Düse 22 auszuschließen, ist der Pumpe 254 ein Filter 256 vorgeschaltet. Das Flüssigkeitsreservoir 220 ist über eine Leitung 258 mit einem stationären Wasseranschluß 260 verbunden, wobei im Verlauf der Leitung 258 ein Ventil 262 und ein Filter 264 angeordnet sind.

Mit der beschriebenen Anordnung besteht daher die Möglichkeit, einerseits eine mobile Anlage über ein mobiles Flüssigkeitsreservoir 248 zu betreiben oder andererseits mittels eines stationären Wasseranschlusses 260. Zu erwähnen ist noch, dass im Verlauf einer Zuleitung 266 von der Mischkammer 214 zu der Düse 220 ein Temperaturwächter 268 vorgesehen ist, der dann die Zufuhr des Gemisches unterbricht, wenn eine bestimmte Temperatur über- bzw. unterschritten wird.

Mit den Anlagen gemäß Fig. 8 und Fig. 9 kann sowohl eine Trockenreinigung als auch eine Nass-/Feuchtreinigung der Gegenstände 12 durchgeführt werden. Insbesondere bei der Trockenreinigung erfolgt eine Befeuchtung bzw. ein Wasserbad in der Vorstation 196 nicht.

Selbstverständlich können sämtliche Anlageteile gemäß Fig. 8 bzw. Fig. 9 auf einer mobilen Einheit wie LKW-Anhänger angeordnet sein. Zur Gewichtsreduzierung sind dann sämtliche Metallteile vorzugsweise aus Aluminium hergestellt.

Fig. 10 zeigt die Draufsicht einer zweistufigen Reinigungsstation 270, die sich im Wesentlichen aus zwei hintereinander angeordneten Reinigungsstationen gemäß Fig. 1 zusammensetzt. Mit einer ersten Drehscheibe 272 mit diagonal gegenüberliegenden Düsen 274, 276 erfolgt eine Vorreinigung der durch die Einlassöffnung 278 zugeführten Gegenstände. Zuvor werden die eingeführten Gegenstände mittels umfangsseitig in der Einlassöffnung 278 angeordneter Sprühdüsen 280 mit einer Flüssigkeit wie Wasser vorgereinigt.

Der Drehscheibe 272 nachgeordnet sind Gleitelemente 282, 284, durch die eine Verengung der Förderstrecke erfolgt. Dies hat den Vorteil, dass die zu reinigenden Gegenstände gestaut werden, wodurch die Aufenthaltszeit im Einflussbereich der rotierenden Düsen 274, 276 verlängert wird. Anschließend erfolgt eine Verteilung der Gegenstände auf der gesamten Breite der Förderstrecke, so dass die Gegenstände in den Einflussbereich einer zweiten rotierenden Scheibe 286 mit ebenfalls einer ersten Düse 288 und einer zweiten Düse 290 gelangen. Optional kann die Drehscheibe 286 auch mehrere Düsen aufweisen. Durch die Drehscheibe 286 mit den daran angeordneten Düsen erfolgt eine Vollreinigung der Gegenstände. Anschließend werden die Gegenstände durch eine Auslassöffnung 292 ausgegeben, wobei gegebenenfalls eine Nachreinigung über Sprühdüsen 294 erfolgt.

In Fig. 11 ist eine mobile Reinigungsanlage 294 dargestellt, die in dieser Ausführungsform auf einem Anhänger bzw. einer LKW-Ladefläche montiert werden kann und zum mobilen Einsatz am Feldrand eingesetzt werden kann, d. h. unabhängig von öffentlichen Wasser- und Stromversorgungen einsatzbereit ist. Der Vorteil dieser Anlage besteht des Weiteren darin, dass das abgereinigte Erdreich direkt auf dem Feld wieder verteilt werden kann.

Die Anlage 294 weist eine zweistufige Reinigungsstation 270 gemäß Fig. 10 auf. Die Reinigungsanlage 294 umfasst eine Ladeeinheit 295 zum Aufnehmen von Wurzeln oder Zuckerrüben von Lagerstätten am Feldrand und zum Beschicken eines Bunkers 296, von dem aus die mit Erdreich verschmutzten Gegenstände wie Kartoffeln, Gemüse oder Wurzeln über ein Förderband 298 der Reinigungsstation 270 zugeführt werden. Die Zuführung und Erzeugung des Druckluft-Flüssigkeits-Gemischs erfolgt entsprechend einer Anlage, wie sie mit Bezug zu Fig. 8 bzw. Fig. 9 beschrieben wurde.

Im Einzelnen weist die Anlage 294 einen Dieselmotor 300 auf, der einerseits einen Kompressor 302 und andererseits einen Generator 304 antreibt. Die aus dem Kompressor 302 austretende Druckluft wird in einer Aufbereitungsanlage 306 gekühlt und aufbereitet. Sodann wird die Druckluft über eine Leitung 308 einer Mischkammer 310 sowie einem Wasser-reservoir zugeführt, wobei das Wasserreservoir 312 über eine Leitung 314 ebenfalls mit der Mischkammer 310 verbunden ist. Die Mischkammer 310 ist ausgangsseitig über eine Leitung 316 jeweils mit einer Reinigungsstation verbunden, um die Düse 22 mit dem Druckluft-Flüssigkeits-Gemisch zu versorgen.

Nach der Reinigung werden die Gegenstände auf ein Förderband 318 abgelegt und auf einen Lagerplatz gefördert. Das Förderband 318 ist zweiteilig ausgebildet und kann insbesondere zum Transport der Anlage 294 im Straßenverkehr um 90° angewinkelt werden, so dass die nach der STVO vorgeschriebenen Breitenabmessungen eingehalten werden können.

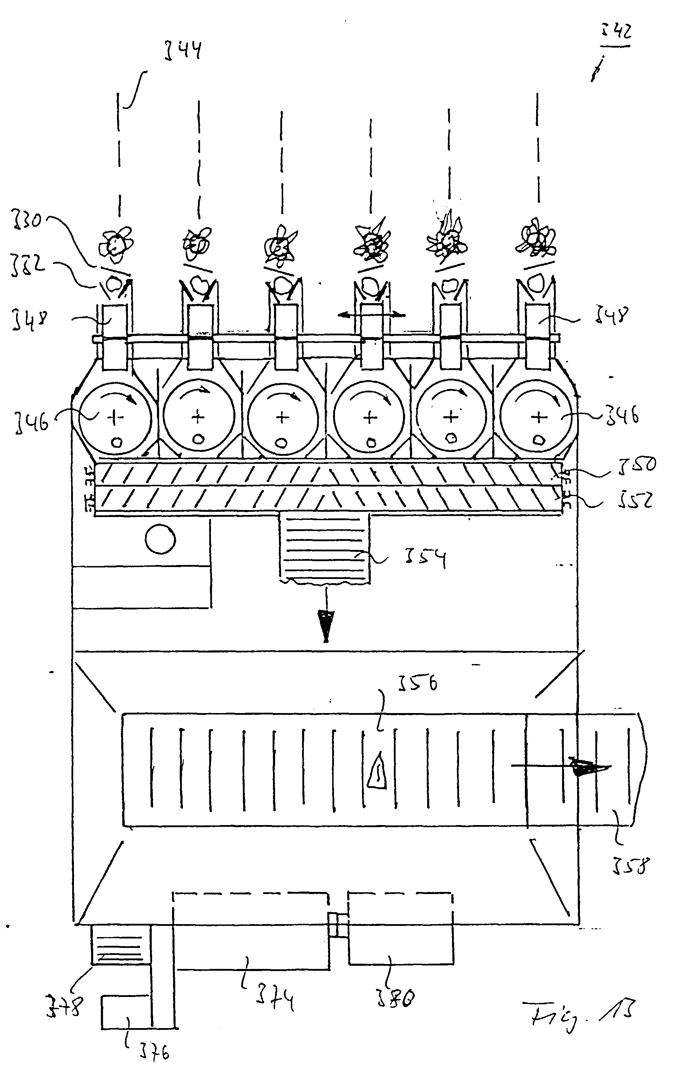

In Fig. 12 ist eine prinzipielle Darstellung einer ersten Ausführungsform einer Erntemaschine 320 dargestellt, die vorzugsweise zum Ernten von Zuckerrüben ausgebildet ist. Die Erntemaschine 320 ist als selbstfahrendes mobiles Gerät mit einer Vorderachse 322 und einer Hinterachse 324 ausgebildet. Der Vorderachse 322 ist eine vorzugsweise sechsreihige Erntevorrichtung 326, bestehend aus in jeder Reihe nacheinander angeordneten Entblätterer 328, Nachköpfer 330 und Polderschar 332. Die so zubereiteten, d. h. entblätterten und geköpften Zuckerrüben werden über eine Transportwalze 334 einem mittig angeordneten Gurtförderband 336 zugeführt, das die Zuckerrüben vorzugsweise drei parallel angeordneten Reinigungsstationen 338 zuführt. Die Reinigungsstationen 338 können als zweistufige Reinigungsstationen gemäß Fig. 10 oder als einstufige Reinigungsstation gemäß Fig. 1 ausgebildet sein. Den Reinigungsstationen 338 ist ein Ringförderband 340 nachgeordnet, das die gereinigten Zuckerrüben in einen Bunker ablegt. Der Bunker kann oberhalb der Hinterachse 324 angeordnet sein.

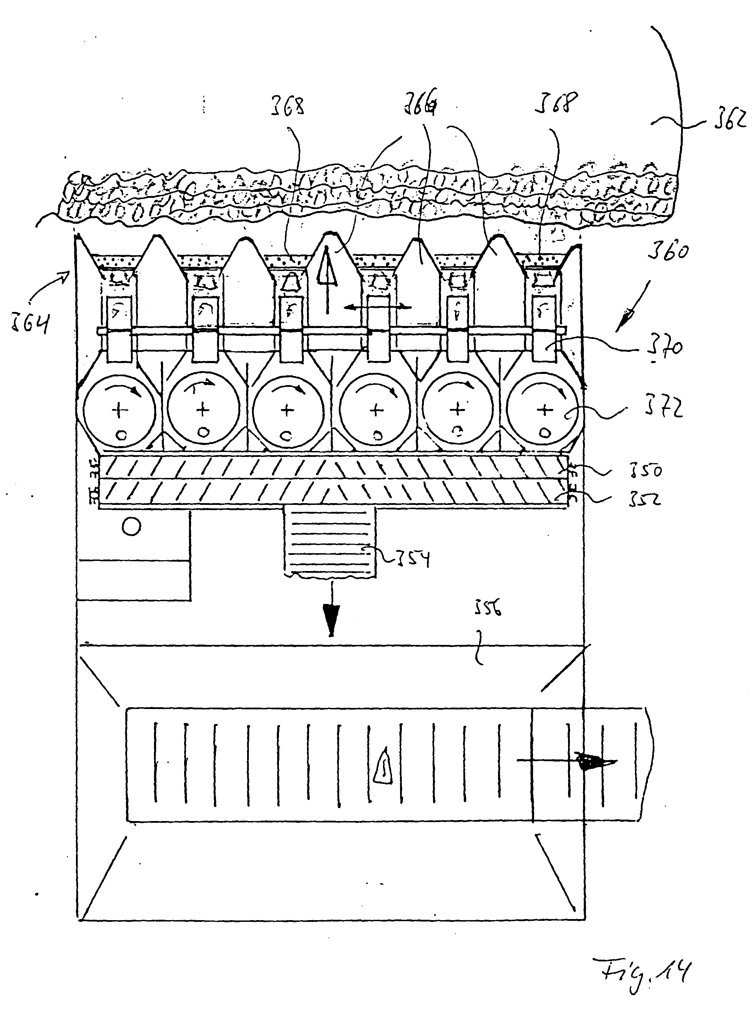

Fig. 13 zeigt eine weitere Ausführungsform einer Erntemaschine 342. Die Erntemaschine ist ebenfalls als sechsreihige, selbstfahrende Zuckerrüben-Vollerntemaschine ausgebildet. Im Gegensatz zu der Ausführungsform gemäß Fig. 12 ist jeder Erntereihe 344 eine eigene Reinigungsstation 346 zugeordnet. Die aus dem Erdreich entnommenen Zuckerrüben werden über ein Förderpaddel 348 der Reinigungsstation 346 zugeführt. Ansonsten weisen die jeder Reihe zugeordneten Erntevorrichtungen ebenfalls den Entblätterer 330 sowie das Polderschar 332 auf.

Die gereinigten Zuckerrüben werden über Sammelwalzen 350, 352, die entlang der Reinigungsstationen 346 quer zur Fahrtrichtung angeordnet sind, mittig transportiert, wo sie von einem Förderband 354 in einen Zwischenbunker 356 transportiert werden. Aus dem Zwischenbunker 356 gelangen die Rüben über ein weiteres Förderband 358 in ein Endlager.

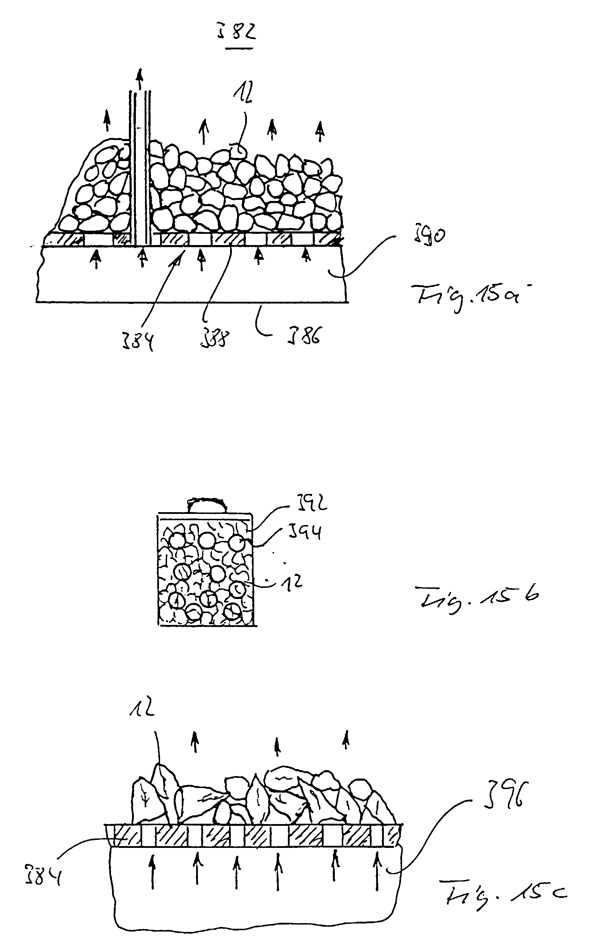

Eine Erfindung mit eigenständigem Erfindungsgehalt wird in Fig. 14 schematisch dargestellt. Dabei handelt es sich um eine Lademaschine 360 zum Aufladen von gelagerten, mit Erdreich verschmutzten Gegenständen wie Zuckerrüben 362. Im Frontbereich weist die Ladevorrichtung 360 eine gabelförmige Aufnahme 364 auf, die vorzugsweise aus einem Kunststoff besteht, die bei guten Gleiteigenschaften wenig Verschleiss aufweist. Zwischen einzelnen Zinken 366 der kamm- bzw. gabelförmigen Aufnahme 364 sind Aufnahmen 368 angeordnet, die als Leisten oder als Kammwalzen ausgebildet sein können. Den Aufnahmen 368 sind Förderpaddel 370 vorzugsweise aus Hartgummi nachgeordnet, die die von der Gabelvorrichtung 364 und der Aufnahme 368 aufgenommenen Zuckerrüben in nachgeordnete Reinigungsstationen 372 fördert. Der folgende Aufbau mit Walzen 350, 352, Förderband 354 sowie Bunker 356 entspricht dem Aufbau gemäß Fig. 13. Zur Versorgung der Reinigungsstationen sowie der Förderbänder, Schnecken und Förderpaddel kann die Reinigungsanlage mit einem Dieselmotor 374 in Verbindung mit einem Generator 376 bzw. einem Kompressor und einer Hydraulikvorrichtung 378 ausgestattet sein. Auch kann der Dieselmotor 374 zur Erzeugung des Druckluft-Flüssigkeit-Gemischs mit einer Anlage gemäß Fig. 8 bzw. Fig. 9 verbunden sein.

Fig. 15 a zeigt in Seitenansicht eine Reinigungsanlage 382 zum Lagern von gereinigten Gegenständen wie Kartoffeln oder Zuckerrüben. Die Reinigungsanlage weist einen luftdurchlässigen Träger 384 auf, der mit Abstand zu einem Boden 386 angeordnet ist. Bei dem luftdurchlässigen Träger 384 kann es sich um mit Abstand zueinander angeordnete Holzleisten 388 handeln. Auf dem Träger 384 sind die gereinigten Kartoffeln 12 gelagert, die sich besonders durch eine glatte Oberfläche auszeichnen, so dass eine ausgezeichnete Luftzirkulation und eine Wärmeabfuhr nach Einlagerung ermöglicht wird. Besonders vorteilhaft wird in einem Zwischenraum 390 bzw. Kanal durch ein Gebläse (nicht dargestellt) Frischluft zugeführt, die im Winter auch erwärmt sein kann. Da die Kartoffeln 12 sich nur punktweise berühren, ist eine Luftzirkulation immer möglich. Insgesamt wird in Zusammenhang mit der erfindungsgemäßen Reinigungsanlage insbesondere durch die Reinigung der Kartoffeln in einem geschlossenen Raum mit Rückführung eines Luft-Feuchtigkeits-Gemischs durch die Düse und Anreicherung des Reinigungsstromes mit Stickstoff eine besonders wirkungsvolle Reinigung der Kartoffeln erzielt, so dass eine Lagerung ohne Pilze und Bakterien möglich ist. Da die Kartoffeln 12 die Reinigungsstationen besonders trocken verlassen, insbesondere ohne Erdanhang, ist auch gewährleistet, dass sich während der Lagerung keine Faulstellen bilden.

In Fig. 15 b ist eine weitere Möglichkeit zur Lagerung von gereinigten Kartoffeln dargestellt, wobei die Kartoffeln 12 in einem Beutel 392 bzw. Netzsack mit Löchern 394 gelagert werden.

In Fig. 15 c ist eine weitere Lagermöglichkeit dargestellt, wobei die Zuckerrüben oder Kartoffeln 12 ebenfalls auf einem Trägerrost 384 angeordnet sind und wobei unterhalb des Trägers 384 ein Strömungskanal 396 angeordnet ist, über den unter Zuhilfenahme eines Gebläses kühle oder warme Frischluft geregelt zuführbar ist, um die gelagerten Gegenstände z. B. auf einer Halde oder in einer Fabrik zu lagern, ohne dass sich gefährliche Pilze oder Bakterien bilden, die zu Faulstellen führen können.

Mit der erfindungsgemäßen Reinigungsanlage 10 sowie den mobilen Ernte- und Lademaschinen 320, 360 werden gegenüber dem Stand der Technik eine Vielzahl von Vorteilen erreicht. Insbesondere ist anzumerken, dass bei der herkömmlichen Zuckerrübenwäsche nach dem Stand der Technik diese in einem Schwemmkanal bzw. einem Wasserbad verbleiben mit dem Nachteil, dass ein erheblicher Zuckeranteil aus den Zuckerrüben ausgelaugt bzw. ausgewaschen wird. Erfindungsgemäß verweilen die zu reinigenden Gegenstände, insbesondere die Zuckerrüben, partiell nur für den Bruchteil einer Sekunde im Einflussbereich des Druckluft-Flüssigkeits-Gemischs, so dass verbunden mit dem schnellen Transport durch die Reinigungsanlage ein Auslaugen und damit ein Zuckerverlust aus der Zuckerrübe nicht möglich ist.

Ein weiterer zu erwähnender Vorteil ergibt sich bei der Reinigung von Wurzeln wie zum Beispiel der Arzneiwurzel Baldrian. Derartige Früchte bestehen aus einem Herzstück mit einem fein verästelten Wurzelwerk, das im Ackerboden verläuft. Beim Ernten einer solchen Wurzel entspricht das Erntegewicht, das heisst das Gewicht der Wurzel mit anhaftendem Erdreich, etwa dem 4 - 6fachen Gewicht der eigentlichen Wurzel. Nach dem Stand der Technik wird zum Reinigen einer solchen Wurzel diese mehrmals manuell geteilt, wodurch das Wurzelherzstück und die Wurzeln beschädigt werden. Aus den Schnittstellen werden ätherische Öle ausgewaschen, was mit erheblichen Qualitätsverlusten verbunden ist.

Bei der Reinigung mit der erfindungsgemäßen Reinigungsanlage 10, 270 erübrigt sich ein Teilen des Wurzelherzstücks, da das an der Wurzel anhängende Erdreich in seiner Gesamtheit abgereinigt werden kann. Durch die rotierende Düse mit dem Druckluft-Flüssigkeits-Gemisch innerhalb des geschlossenen Raumes wird auch zwischen dem fein verästelten Wurzelwerk anhaftende Ackererde ausgespült bzw. ausgewaschen, ohne dass eine Teilung der Wurzel notwendig ist.

## Patentansprüche

1. Reinigungsanlage (10, 270) zur Reinigung von vorzugsweise mit Erde verschmutzten Gegenständen (12), umfassend zumindest eine um eine Achse (20) rotierende Düse (22) zur Beaufschlagung der zu reinigenden Gegenstände (12) mit einem Druckluft-Flüssigkeits-Gemisch (60),
**dadurch gekennzeichnet,**
dass die zumindest eine um die Achse (20) rotierende Düse (22) in einem im Wesentlichen geschlossenen Raum (18) angeordnet ist, wobei die Düse (22) einen Auslauf (110) mit zumindest einer Öffnung (120) aufweist, über die eine Rückführung von in dem geschlossenen Raum (18) enthaltenem Luft-Flüssigkeits-Gemisch zu dem aus der Düse (22) austretenden Druckluft-Flüssigkeits-Gemisch erfolgt.

2. Reinigungsanlage nach Anspruch 1,
**dadurch gekennzeichnet,**
dass die zumindest eine Düse (22) in einer in dem geschlossenen Raum (18) rotierenden Scheibe (24) angeordnet ist, wobei ein Auslass (116) des Auslaufs (110) der Düse (22) an einer den zu reinigenden Gegenständen (12) zugewandten Seite (118) der Scheibe (24) mündet und wobei die zumindest eine Öffnung (120) oberhalb der Scheibe (24) angeordnet ist.

3. Reinigungsanlage nach Anspruch 1 oder 2,
**dadurch gekennzeichnet,**
dass auf der Unterseite (118) der Scheibe (24) im Bereich des Auslasses (116) der Düse (22) eine Strömungseinrichtung (126) angeordnet ist, die einen bei der Rotationsbewegung der Scheibe aufgenommenen Luftstrom zum Auslass der Düse leitet, so dass das Druckluft-Flüssigkeits-Gemisch mit dem gebündelten Luft-Flüssigkeits-Gemisch vereinigt wird.

4. Reinigungsanlage nach zumindest einem der vorhergehenden Ansprüche,
**dadurch gekennzeichnet,**
dass die Strömungseinrichtung (126) trichterförmig ausgebildet und in Drehrichtung der Scheibe vor dem Auslass (116) angeordnet ist, wobei eine Austrittsöffnung (130) der Strömungseinrichtung (126) zumindest bereichsweise den Auslass der Düse umrandet und dass die Strömungseinrichtung (126) einen Strömungsquerschnitt aufweist, der sich in Strömungsrichtung zunächst verjüngt und anschließend wieder erweitert.

5. Reinigungsanlage nach zumindest einem der vorhergehenden Ansprüche,
**dadurch gekennzeichnet,**
dass die Düse (22) einen Kreis mit einem Durchmesser D abfährt, wobei der Durchmesser D einer Breite einer in dem geschlossenen Raum (18) angeordneten Fördereinrichtung (26) für die zu reinigenden Gegenstände (12) entspricht.

6. Reinigungsanlage nach zumindest einem der vorhergehenden Ansprüche,
**dadurch gekennzeichnet,**
dass die Fördereinrichtung (26) parallel verlaufende Walzen (28) umfasst, die mit ihrer Längsachse in Transportrichtung verlaufen, wobei die Walzen (28) als Schnekkenwalzen ausgebildet sind.

7. Reinigungsanlage nach zumindest einem der vorhergehenden Ansprüche,
**dadurch gekennzeichnet,**
dass eine Transportgeschwindigkeit der zu reinigenden Gegenstände (12) zu einer Drehgeschwindigkeit der Scheibe (24) so eingestellt ist, dass letztere Geschwindigkeit größer ist.

8. Reinigungsanlage nach zumindest einem der vorhergehenden Ansprüche,
**dadurch gekennzeichnet,**
dass die Reinigungsanlage (10) unterhalb der rotierenden Scheibe (24) zumindest bereichsweise eine schiefe Ebene (64) aufweist, wobei ein Abstand der zu reinigenden Gegenstände (12) zu der rotierenden Scheibe (24) in Transportrichtung abnimmt, dass in der schiefen Ebene (64) quer zur Förderrichtung liegende Transportförderwalzen (74) angeordnet sind, wobei eine Oberfläche der schiefen Ebene zumindest bereichsweise als Lochblech (86) ausgebildet ist und dass der schiefen Ebene in einer waagerechten Ebene liegende Walzen vorzugsweise Filzwalzen zum Trocknen der Gegenstände nachgeordnet sind.

9. Reinigungsanlage nach zumindest einem der vorhergehenden Ansprüche,
**dadurch gekennzeichnet,**
dass der geschlossene Raum (18) eine Einlass- und eine Auslassöffnung (88, 62) aufweist, die jeweils mit einem Vorhang, vorzugsweise Lamellenvorhang, schall- und wasserdicht abgedichtet sind.

10. Reinigungsanlage nach zumindest einem der vorhergehenden Ansprüche,
**dadurch gekennzeichnet,**
dass die rotierende Scheibe (24) zwei diagonal gegenüberliegende Düsen (22, 94) und/oder zwei in Umfangsrichtung hintereinander angeordnete Düsen (22, 96) und/oder zwei oder mehr Düsen (22, 52) in radialer Richtung auf verschiedenen Radien R₁, R₂, aufweist.

11. Reinigungsanlage nach zumindest einem der vorhergehenden Ansprüche,
**dadurch gekennzeichnet,**
dass die Reinigungsanlage (270) mehrstufig, vorzugsweise zweistufig ausgebildet ist, wobei in einem geschlossenen Raum in Förderrichtung mehrere, vorzugsweise zwei rotierende Scheiben hintereinander angeordnet sind und wobei zwischen den rotierenden Scheiben eine Verengung der Transportbahn vorgesehen ist, dass vorzugsweise im Einlass- und/oder Auslassbereich Sprühdüsen (92, 98) zur Abgabe von Fluid wie Wasser angebracht sind, dass die Reinigungsanlage (10, 270) vorzugsweise stationär und/oder mobil aufgebaut ist, dass die Reinigungsanlage (10, 270) vorzugsweise Bestandteil einer Ernte- und/oder Lademaschine ist und dass sämtliche oder nahezu sämtliche Metallteile der Reinigungsanlage (10, 270) und/oder der Erntemaschine (342) und/oder der Ladevorrichtung (360) in Leichtbauweise ausgeführt sind, vorzugsweise aus Aluminium-Werkstoff bestehen.

12. Erntemaschine,
**dadurch gekennzeichnet,**
dass diese zumindest eine Reinigungsanlage zum Reinigen von mit Erde verunreinigten Gegenständen aufweist, wobei die Erntemaschine (342) mehrreihig, vorzugsweise sechsreihig ausgebildet ist, mit einer Erntevorrichtung mit vorzugsweise einem Entblätterer (328), einem Entköpfer (330), sowie einem Polderschar (332), wobei der Erntevorrichtung (326) quer zur Fahrtrichtung liegende Transportwalzen (334) nachgeordnet sind, die die Gegenstände auf ein Förderband (336) leiten, welches die Gegenstände in zumindest eine, vorzugsweise drei parallel nebeneinander angeordnete Reinigungsstationen weiterleitet.

13. Reinigungsanlage nach zumindest einem der vorhergehenden Ansprüche,
**dadurch gekennzeichnet,**
dass einer Erntereihe (344) eine einzelne Reinigungsstation (346) zugeordnet ist, wobei die Gegenstände von der Erntevorrichtung über eine Fördereinrichtung (348) wie ein Förderpaddel zur Reinigungsstation (346) transportiert werden.

14. Reinigungsanlage nach zumindest einem der vorhergehenden Ansprüche,
**dadurch gekennzeichnet,**
dass die Reinigungsanlage (10, 270) mit einer Anlage (148, 210) zur Erzeugung des Druckluft-Flüssigkeits-Gemischs (60) verbunden ist, wobei die Anlage (148, 210) zumindest ein Wasser-Reservoir (154, 218, 220) aufweist, das beheizbar ist und/oder eine Wärmedämmung mit Schallschutz aufweist und dass die Anlage (148, 210) in Komponenten bestehend aus Reinigungsanlage (10, 270), einem Antrieb (152) mit zugehörigem Kompressor (150), dem Wasser-Reservoir (154, 218, 230) zusammensetzbar ist, wobei die Komponenten auf mobilen Paletten montiert sind.

15. Reinigungsanlage nach zumindest einem der vorhergehenden Ansprüche,
**dadurch gekennzeichnet,**
dass sich die zu reinigenden Gegenstände (12), insbesondere Zuckerrüben, mit einem Oberflächenbereich nur für Bruchteile einer Sekunde im Einflussbereich des Druckluft-Flüssigkeits-Gemisches (60) befinden und dass eine schonende Reinigung der Gegenstände (12) erfolgt, wobei bei der Reinigung keine oder im Wesentlichen keine in den Gegenständen enthaltende Stoffe wie ätherische Öle, Zucker, Nährstoffe und ähnliche Stoffe verlorengehen.
